# EUROPEAN PATENT APPLICATION

(11) **EP 4 393 313 A1**
(43) Date of publication of application: **03.07.2024**
(21) Application number: 23157865.9
(22) Date of filing: 21.02.2023
(51) Int. Cl.: A23G 1/00, A23G 1/30, A23G 1/36, A23G 1/54, A23G 9/48

(54) **FREEZE-DRIED CHOCOLATE AND PREPARATION PROCESS THEREOF**

(30) Priority: 29.12.2022 CN 202211705065
(71) Applicant: Giasiming (Zhuhai) Food Technology Ltd, Zhuhai City, Guangdong 519055 (CN)
(72) Inventor: CHENG, Qian, Zhuhai City (CN); DUAN, Jinge, Zhuhai City (CN)
(74) Representative: Moré, Solveig Helga

(57) **Abstract**

The present disclosure provides freeze-dried chocolate and a preparation process thereof, and belongs to the fields of chocolate processing technology and freeze-dried food processing technology. The freeze-dried chocolate provided by the present disclosure uses a chocolate powder with a total fat content of ≤25% and a particle size of ≤35 µm as an ingredient. The chocolate powder is mixed with a solvent to successively undergo filling, freeze-forming, freeze-drying, and demolding to obtain the freeze-dried chocolate. A skeleton for constructing a porous structure of the freeze-dried chocolate provided by the present disclosure includes non-fat materials, which do not construct a continuous fat phase and do not have the problem of deformation, collapse, and oil-off caused by oil/fat melting at high temperatures.

## Description

### TECHNICAL FIELD

The present disclosure belongs to the fields of chocolate processing technology and freeze-dried food processing technology, and particularly relates to freeze-dried chocolate and a preparation process thereof.

### BACKGROUND

Chocolate is a sweetmeat made from cocoa butter, cocoa liquor, and other cocoa products as main ingredients, with a delicate taste and rich aroma. Traditional commercial chocolate is loved by consumers due to health functions thereof in addition to smoothness. However, because of the melting point and characteristics of the cocoa butter, chocolate has poor thermal stability, and it is difficult to be marketed, sold, and carried around in summer and in high temperature and tropical regions without cooling.

European Patent No. EP 1072199 A1 discloses a freeze-dried food product, including a process for preparing freeze-dried chocolate, namely, adding oil or fat in preparing a solution or paste, which aims to provide a better silky smooth taste than that obtained by other freeze-dried food products. However, the chocolate product prepared by the preparation process still has the following problems: when the chocolate product is packaged and placed at a temperature higher than 55°C. There are problems of chocolate sticking and staining the packaging due to fat melting and separating from the chocolate under high temperature. Product deformation may even occur, so thermal stability will still be improved.

### SUMMARY

In view of this, an objective of the present disclosure is to provide freeze-dried chocolate and a preparation process thereof. The freeze-dried chocolate provided by the present disclosure has excellent thermal stability.

The present disclosure provides a preparation process of freeze-dried chocolate, including the following steps of:
subjecting a chocolate powder and a solvent to mixing and high shear emulsifying to obtain a chocolate solution; and
successively subjecting the chocolate solution to filling, freeze-forming, freeze-drying, and demolding to obtain the freeze-dried chocolate, where
a total fat content of the chocolate powder is <25%; the chocolate powder has a particle size of ≤35 µm; and
no oils or fats are added in the solvent.

Preferably, the total fat content of the chocolate powder may be in a range of 15%-25%.

Preferably, the chocolate powder may be obtained by roller milling or air jet pulverization.

Preferably, equipment used in the roller milling may include two three-roll refiners in series, a six-roll refiner, or a five-roll refiner.

Preferably, a water content of the solvent may be 90%-100% of solvent weight.

Preferably, a weight ratio of the solvent in the chocolate solution may be 10%-80% of the weight of the chocolate solution.

Preferably, the filling may be carried out in more than one time, namely, after previous filling, the chocolate solution is superficially or fully prefrozen into a solid, and a next filling is conducted thereon.

Preferably, additive(s) may be further added in cavities of a mold and/or the chocolate solution before or after the filling; and the additive may be one or more selected from the group consisting of nuts, cereals, vegetables, and fruits.

Preferably, ingredients of the chocolate powder may be food-grade ingredients; and the food-grade ingredients may include cocoa products and other ingredients;

the cocoa products may be one or more selected from the group consisting of cocoa butter, cocoa powder, and cocoa liquor; and

the other ingredients may be one or more selected from the group consisting of vegetable oils, milk fat, milk powder, sugar, syrup, sugar substitutes, starch, nuts, fruits, vegetables, cereals, and fiber.

The present disclosure further provides freeze-dried chocolate prepared by the preparation process according to the above solution, which has the characteristics of no sticking to packaging, no melting or deforming observed while being put under a temperature of ≤65°C.

The present disclosure provides a preparation process of freeze-dried chocolate. The freeze-dried chocolate provided by the present disclosure uses a chocolate powder with a total fat content of ≤25% and a particle size of ≤35 µm as an ingredient. The chocolate powder is mixed with a solvent to successively undergo filling, freeze-forming, freeze-drying, and demolding to obtain the freeze-dried chocolate. In the present disclosure, the chocolate powder with a total fat content of ≤25% and a particle size of ≤35 µm does not construct a continuous fat phase. In the freeze-dried chocolate formed by freeze-drying, a skeleton for constructing a porous structure includes non-fat materials, which do not exhibit deformation, collapse, and oil-off due to the melting of oils and fats at high temperatures. According to experiments, at 65°C, freeze-dried chocolate products prepared by the preparation process provided by the present disclosure do not exhibit product sticking and staining to the packaging and product deformation, so that the freeze-dried chocolate products provided by the present disclosure have excellent thermal stability. Thus, the chocolate really becomes a product that can be transported and sold at room temperature in four seasons without cooling or air conditioning .

In addition, the chocolate powder with a particle size of ≤35 µm is used in the present disclosure and a microporous structure is observed in the freeze-dried chocolate. Therefore, when consumers eat the freeze-dried chocolate, the freeze-dried chocolate can rehydrate and collapse depending on the absorption of consumers' saliva, sensually bringing chocolate consumers a tasting pleasure of no chewing and immediately melting in the mouth. Meanwhile, once the chocolate has rehydrated and collapsed, oils and fats in the chocolate are melted by the oral temperature of consumers or the contact with the consumer's mouth, bringing chocolate consumers a desired smooth wonder and a rich aroma perception and conferring a silky taste on the chocolate.

### DETAILED DESCRIPTION OF THE EMBODIMENTS

The present disclosure provides a preparation process of freeze-dried chocolate, including the following steps of:
subjecting a chocolate powder and a solvent to mixing and high shear emulsifying to obtain a chocolate solution; and
successively subjecting the chocolate solution to filling, freeze-forming, freeze-drying, and demolding to obtain the freeze-dried chocolate, where
a total fat content of the chocolate powder is ≤25%; the chocolate powder has a particle size of ≤35 µm; and
no oils or fats are added in the solvent.

In the present disclosure, a chocolate powder and a solvent are subjected to mixing and high shear emulsifying to obtain a chocolate solution.

In the present disclosure, the total fat content of the chocolate powder may be ≤25%, preferably 15%-25%, and more preferably 20%-23%. In the present disclosure, since the freeze-dried chocolate has low fat content, compared with conventional chocolate, oil and fat intake is reduced by nearly 40%-50% while consumers enjoy chocolate products.

In the present disclosure, ingredients of the chocolate powder may be food-grade ingredients; the ingredients of the chocolate powder may preferably include lipid materials, low-oil-and-fat and non-lipid materials; and more preferably, the ingredients of the chocolate powder may further include emulsifiers and flavors and flavorings.

In the present disclosure, the lipid materials include, but are not limited to, lipid materials of plants and animals, preferably including one or more of cocoa butter, vegetable oils, and milk fat.

In the present disclosure, the low-oil-and-fat and non-lipid materials may include materials or mixed materials derived from plants and animals, preferably include one or more of cocoa powder, cocoa liquor, milk powder, sugar, syrup, starch, nuts, fruits, vegetables, and fiber, and more preferably further include functional materials; the functional materials may preferably include vitamins and/or probiotics; and the functional materials enables the freeze-dried chocolate provided by the present disclosure to become functional chocolate or freeze-dried chocolate with homology of medicine and food or therapeutic effect.

In the present disclosure, the chocolate powder may preferably be prepared by the following method:
mixing the ingredients of the chocolate powder to obtain a chocolate mixture; and grinding the chocolate mixture to obtain the chocolate powder.

In the present disclosure, the ingredients of the chocolate powder may preferably be mixed in a mixer; the mixing may preferably be conducted at 45-55°C, and more preferably 50°C; after feeding is completed, mixing time may preferably be 5-30 min, and more preferably 10-20 min; and the order of the mixing may preferably include melting oils and fats in the ingredients of the chocolate powder and mixing other ingredients.

In the present disclosure, the chocolate powder may preferably be obtained by roller refining or jet milling; and equipments used in the roller refining may preferably include two three-roll refiners in series, a six-roll refiner, or a five-roll refiner. In the present disclosure, the three-roll refiner may preferably be the three-roll refiner in Chinese Patent No. ZL202120807255.4. In the present disclosure, the six-roll refiner may preferably be a six-roll refiner in Chinese Patent No. 202023273023.X.

During the specific implementation of the present disclosure, the chocolate mixture is fed into a hopper of a roll refiner; the roll refiner is turned on; in automatic or semi-automatic mode, the chocolate mixture is ground into a chocolate powder with a particle size of ≤35 µm, and the chocolate powder is collected.

In the present disclosure, the chocolate powder may preferably be prepared by the preparation process according to Chinese Patent No. ZL 201910303370.5; and the preparation process includes mixing and grinding.

In the present disclosure, the solvent is a food-grade solvent; the solvent may preferably be one or more selected from the group consisting of water, milk, dietary fiber, emulsifier, and gelatinizing agent ; and the solvent may preferably further include food-grade coloring and/or flavorings.

In the present disclosure, the dietary fiber, the colloid, and the emulsifier function as protective agents that increase the internal structural strength of the freeze-dried chocolate, protect the appearance of the freeze-dried chocolate, lowers the risk of losing the desired morphology or shape of the chocolate in the freeze-drying process, and increase sensory quality.

In the present disclosure, a water content of the solvent may preferably be 90%-100% of solvent weight, and more preferably 95% of the solvent weight.

In the present disclosure, a weight ratio of the solvent in the chocolate solution may preferably be 10%-80% of the weight of the chocolate solution, and more preferably 20%-50% of the weight of the chocolate solution.

If the solvent is a mixed solvent, the mixing and high shear emulsifying of the solvent may preferably be further included before mixing the chocolate powder and the solvent. When the solvent is subjected to the mixing and high shear emulsifying, high shear emulsifying may preferably be conducted at 1,000-3,000 rpm for 3-5 min.

The mixing the chocolate powder and the solvent may preferably include adding the chocolate powder in the solvent, and more preferably, gradually adding the chocolate powder in the solvent.

In the present disclosure, the chocolate powder and the solvent are subjected to the mixing and high shear emulsifying. The high shear emulsifying may preferably be conducted at 5,000-6,000 rpm for 5-20 min, and be subject to complete emulsification of the chocolate solution.

In the present disclosure, the high shear emulsifying may preferably be conducted using a high-shear emulsifier. The high-shear emulsifier may preferably be a jacketed structure, and more preferably be provided with a heating and cooling water system for controlling the temperature of the chocolate solution in the solution preparation process.

During the specific implementation of the present disclosure, an ingredient of the solvent is added to the high-shear emulsifier, the high-shear emulsifier is turned on to prepare the solvent, and the chocolate powder is gradually added to the high-shear emulsifier until a completely emulsified chocolate solution is obtained.

In the present disclosure, after the chocolate solution is obtained, the chocolate solution is successively subjected to filling, freeze-forming, freeze-drying, and demolding to obtain the freeze-dried chocolate.

In the present disclosure, the filling refers to filling the chocolate solution in a mold, and preferably, filling the chocolate solution in the cavity of the mold.

In the present disclosure, the freeze-dried chocolate may preferably be made into a center filling structure. For example, a white chocolate solution and a dark chocolate solution are prepared, respectively; and the white chocolate solution is wrapped in the dark chocolate solution with a one-shot depositor, and treated by freezing and freeze-drying processes to prepare freeze-dried chocolate with a center filling structure.

In the present disclosure, the filling may be conducted preferably at least two times, namely, after previous filling, the chocolate solution is superficially or fully prefrozen into a solid, and a next filling is conducted thereon. In the present disclosure, the freeze-dried chocolate made by more than one time filling is in a structure of multilayer.

In the present disclosure, a solid ice upper surface which is hard enough to support a next solution may preferably be formed.

In the present disclosure, the pre-freezing is intended to not only obtain better porous shape, size, quantity, and distribution, but also to form a solid ice top surface of a chocolate solution filled in cavities of a mold to facilitate the addition of other food-grade materials; and the food-grade materials may include the chocolate solution or other non-chocolate food-grade material solutions.

In the present disclosure, other food-grade ingredients or a paste or liquor made from the other food-grade ingredients may be added on the surface of a prefrozen chocolate solution to serve as a decorative layer of the freeze-dried chocolate or construct a multilayer structure, for example, freeze-dried chocolate with a double-layer structure constructed by two different kinds of chocolate or that with a center filling structure.

In the present disclosure, each layer to construct the multilayer structure may be identical or have different colors, flavors, thicknesses, densities, air-filled cavities, mouthfeel characteristics, and taste characteristics. The multilayer structure in the present disclosure may be of varying formulas, flavors, additives, microporous structures, and densities. A bar of the freeze-dried chocolate can bring consumers the enjoyment of multiple mouthfeels and flavors.

In the present disclosure, different chocolate solutions may be used in multiple filling to obtain freeze-dried chocolate having a plurality of flavors and mouthfeels.

In the present disclosure, an additive may preferably be further added into the cavities of a mold and/or the chocolate solution before or after the filling; and the additive may be one or more selected from the group consisting of nuts, cereals, vegetables, and fruits.

In the present disclosure, there is no particular limitation on the ingredient state of the additive, including but not limited to fresh ingredients, dried powders, solutions, or particles having a smaller size than the cavity of the mold.

In the present disclosure, the freeze-forming may preferably include freezing in a single freezer and freezing in a freeze-drying machine, and more preferably freezing in the freezer; the freeze-forming is subject to the formation of solid ice state; the freeze-forming may preferably be conducted at -10 to -40°C; and there is no particular limitation on the rate of the freeze-forming in the present disclosure. In the present disclosure, the freeze-forming may preferably include prefreezing and deep freezing conducted successively; and there is no particular limitation on the frequency of the prefreezing in the present disclosure.

In the present disclosure, the freeze-drying may preferably be conducted in the freeze-drying machine; the freeze-drying may be vacuum freeze-drying. The freeze-drying is intended to remove water from a frozen chocolate solution by sublimation and vacuum extraction. The freeze-drying may substantially preserve and maintain functions and activity of active functional materials added in the chocolate solution.

In the present disclosure, the demolding refers to removal of the freeze-dried chocolate from the mold.

The present disclosure may choose to or not to apply an outer protective layer to the freeze-dried chocolate. If chosen to apply the outer protective layer to the freeze-dried chocolate, an outer protective coating may be applied to the freeze-dried chocolate before and after the demolding.

In the present disclosure, a method for applying the outer protective layer to the freeze-dried chocolate may preferably include spraying, enrobing or panning.

In the present disclosure, raw materials for constructing the protective layer include, but are not limited to, food-grade oils and fats and gam and gelatinizing agent constructed alone or prepared in mixture.

The freeze-dried chocolate prepared by the preparation process provided by the present disclosure can melt in the mouth rapidly and smoothly due to low fat content and porous structure; moreover, due to high thermal stability, product sticking and staining to packaging and product deformation may not be observed at 65°C.

The present disclosure further provides freeze-dried chocolate prepared by the preparation process according to the above solution, and product sticking, melting, and/or deformation are/is not observed in the freeze-dried chocolate at ≤65°C.

The freeze-dried chocolate provided by the present disclosure has the crispy taste and portability of conventional snacks, and is suitable for travelling, tea break, and festivals, without worrying the problems of weight bearing, melting, sticking on packaging and hands. Since the porous structure in the freeze-dried chocolate provided by the present disclosure is very conducive to rehydration, the chocolate becomes a multifunctional instant food that can either be eaten directly or be used to make a chocolate drinking due to its water-soluble characteristic .

The technical solutions of the present disclosure will be clearly and completely described below with reference to the examples of the present disclosure.

### Example 1

Freeze-dried dark chocolate cubes with a cocoa content of 60%

The formula of the dark chocolate powder was as follows (by weight): cane sugar 40%, cocoa powder 37%, cocoa liquor 15%, and cocoa butter 8%.

The total fat content of the dark chocolate powder (calculated value) was: 19.2%.

The formula of the solvent to make a chocolate solution was as follows (by weight): purified water 95% and fresh milk 5%.

The chocolate solution consisted of (by weight): solvent 70% and dark chocolate powder (solute) 30%.

The preparation process of the freeze-dried dark chocolate cubes included the following steps:

a) Powder making: The cocoa butter and the cocoa liquor were melted in a fat melter based on their proportion in the formula and the batch size of the mixer , and the temperature of the jacket water of the mixer was set at 40-50°C. The melted cocoa butter and cocoa liquor were fed, and other powdered materials were fed successively according to the formula while the mixer was running; after feeding, the mixer kept on running for 10-20 min until a fully mixed chocolate mixture was obtained.

The chocolate mixture was fed into the hopper of the three-roll refiner 1, and the three-roll refiners 1 and 2, in series, were set to run at 2-4 Bar and 100 rpm; the running model was set to automatic running; through these two three-roll refiners in series, the chocolate mixture was ground into a dark chocolate powder, and the particle size of the chocolate powder was ≤35 µm. Subsequently, the ground dark chocolate powder was collected. The three-roll refiners used in this example were those with Chinese Patent No. ZL 2021.2.0807255.4.
b) Solution preparation: According to the formula of the solvent, the purified water and the fresh milk were successively added to a high-shear emulsifier (Guangzhou Conghua Xinke Light Chemical Equipment Factory, JRH-1100S), the emulsifier was turned on to run at 3,000 rpm for 5 min, and a solvent was prepared. According to the formula of the chocolate solution, dark chocolate powder was added slowly, and the emulsifier was successively set to run at 6,000 rpm for 5 min and at 3,000 rpm for 5 min until a fully emulsified chocolate solution was well prepared. During the solution preparation, the jacket water temperature of the emulsification tank of the emulsifier was held at 30°C.
c) Filling: The chocolate solution was filled in cavities of the chocolate mold. The cavity dimension of the mold was 15 × 15 × 15 mm. Excessive chocolate solution was scraped off.
   Freezing: The freezer temperature was set at -40°C. After the temperature was reached, the chocolate mold was put in the freezer and frozen for 4-8 h until the chocolate solution was completely frozen into solid ice state.
d) Drying: The well-frozen chocolate solution, namely the -40°C chocolate solid ice cubes in the mold were put in a freeze-drying machine (Nanjing Yanwo Biotechnology Co., Ltd., YTLG50F) together with the mold. The sublimation temperature was set to 30°C, the degree of vacuum was 30 Pa, and the drying time was 12 h.
e) Demolding: The chocolate mold was taken out to demold the freeze-dried chocolate cubes. The freeze-dried chocolate cubes were removed from the mold.

The water content of the freeze-dried chocolate in this example was 1.1%.

Mouthfeel characteristics: Due to the freeze-drying treatment, the prepared freeze-dried dark chocolate cubes had a crispy mouthfeel and rapidly disaggregated in the mouth within 3-5 s, without chewing. Meanwhile, the freeze-dried dark chocolate cube provided smooth mouthfeel because its measured fat content was 19.5% and the particle size was controlled at ≤35 µm.

Thermal stability testing: The product was sealed and packaged in an aluminum foil bag in a single manner and in a double manner, respectively, and the packed products were put into an incubator for two days (48 h) at 65°C. Packaging sticking, products sticking, and product collapse were not found, and there was no change in the mouthfeel characteristics of the products.

### Example 2

Mocha flavored freeze-dried chocolate bar

The formula of the mocha flavored chocolate powder was as follows: cane sugar 35%, cocoa liquor 25%, cocoa butter 6%, cocoa powder 17%, whole milk powder 10%, and ground coffee 7%. The total fat content of the chocolate powder was about 23%.

The formula of the solvent was: purified water 100%.

The chocolate solution was composed of: solvent 60% and chocolate powder 40%.

The preparation process of the mocha flavored freeze-dried chocolate bar included the following steps:
a) Powder making: The cocoa butter and the cocoa liquor were melted in a in the proportion of ingredients in a fat melter. The melted cocoa butter and cocoa liquor were fed into a mixer, the jacket water temperature of the mixer was set at 40-50°C. Other powdered materials were fed successively according to the formula while the mixer was switched on; after feeding, the mixer kept on running for 20 min until a fully mixed chocolate mixture was obtained. The chocolate mixture was fed into a hopper of a six-roll refiner. The six-roll refiner was set in the automatic running mode. The six-roll refiner was turned on, the chocolate mixture was ground into a mocha flavored chocolate powder with a particle size of ≤30 µm, and the mocha flavored chocolate powder was collected from the discharging belt of the six-roll refiner.
   The six-roll refiner used in this example was that with Chinese Patent No. 202023273023.X.
b) Solution preparation: According to the formula of the chocolate solution, the purified water was added to a high-shear mixer. The high-shear mixer was provided with an emulsifying head, and its jacket water temperature was set at 50°C. The mixer was turned on to run at 3,000 rpm for 5 min. According to the formula, the mocha flavored chocolate powder was fed gradually, and the mixer ran at 6,000 rpm until the chocolate powder feeding was completed. The jacket water temperature of the mixer was set at 30°C. The mixer was set to run at 3,000 rpm for 5 min until a mocha flavored chocolate solution was fully mixed and emulsified.
c) Filling: The chocolate solution was filled in 30 × 30 × 20 mm cavities of the chocolate mold. Excessive chocolate solution was scraped off.
   Freezing: The chocolate mold was placed in a freezer that had been set and reached a setting temperature of -30°C, and frozen for 10 h until the chocolate solution was completely frozen into solid ice.
d) Drying: The chocolate mold was taken out of the freezer and immediately placed in a freeze-drying machine for freeze-drying treatment. The temperature of the freeze-dried chocolate solution was around -30°C, the temperature of the heating plate was 30°C, the degree of vacuum was 20 Pa, and the drying time was 14 h. The mocha flavored freeze-dried chocolate was obtained after freeze-drying treatment.
e) Demolding: The well-processed mocha flavored freeze-dried chocolate was removed from the mold.

The water content of the mocha flavored freeze-dried chocolate in this example was 0.5%.

Mouthfeel characteristics: Due to the freeze-drying treatment, the prepared mocha flavored freeze-dried chocolate bar had a crispy mouthfeel and rapidly collapsed in the mouth within 3-5 s, without chewing. Meanwhile, the mocha flavored freeze-dried chocolate provided silky taste characteristics in the mouth because its measured fat content was 22.5% and the particle size was controlled at ≤30 µm. Besides direct consumption, the product could melt in 60°C warm water rapidly to make mocha flavored chocolate drinks.

Thermal stability testing: The product was sealed and packaged in an aluminum foil bag in a single manner and in a double manner, respectively, and the product was placed in an incubator for 48 h at 65°C. Packaging sticking, products stick to each other, and product collapse were not found, and there was no change in the mouthfeel characteristics of the product.

### Example 3

Freeze-dried chocolate tablet with a double-layer structure

Two chocolate powders made into a double-layer structure were two chocolate powders in Examples 1 and 2, namely the dark chocolate powder and the mocha flavored chocolate powder.

The formula of the solvent was identical to that in Example 2.

The formula of the solution was identical to that in Example 2.

The preparation process of the freeze-dried chocolate with a double-layer structure included the following steps:
a) Powder making: Two chocolate powders in Examples 1 and 2 were collected.
b) Solution preparation: Two chocolate solutions, the dark chocolate solution and the mocha flavored chocolate solution, were prepared according to the formulas of the solvent and the solution and the process in Example 2.
c) Filling: The dark chocolate solution was filled in half the height of the cavities of the mold, and the dimension of the mold cavity was 30 × 30 × 20 mm. The mold was placed in a freezer that had reached a setting temperature of -30°C, and frozen for 1-3 h until the hardness of the top of the chocolate solution was sufficient to support the mocha flavored chocolate solution.
   The mocha flavored chocolate solution was filled in the cavities of the mold until the cavities of the mold were filled.
   The mold was placed in a freezer that had reached a setting temperature of -40°C, and frozen for 10 h until the chocolate solution was completely freeze-formed.
d) Drying: The mold was taken out of the freezer and immediately placed in a freeze-drying machine. The temperature of the frozen chocolate solution was -40°C, the temperature of the heating plate was 40°C, the degree of vacuum was 15 Pa, and the drying time was 14 h. The freeze-dried chocolate with a double-layer structure was obtained.
e) Demolding: The chocolate tablets was removed from the mold.

The water content of the freeze-dried chocolate with a double-layer structure in this example was 0.8%.

Appearance: The side-view of the product exhibited a double-layer structure.

Mouthfeel characteristics: Due to the freeze-drying treatment, the prepared freeze-dried chocolate with a double-layer structure had a crispy mouthfeel and rapidly disaggregated by absorbing the saliva in the mouth within 3 s, without chewing. Meanwhile, the freeze-dried chocolate with a double-layer structure provided silky mouthfeel in the mouth because its measured fat content was 21.4% and the particle size was controlled at ≤35 µm. The freeze-dried chocolate with a double-layer structure provided an enjoyment of double chocolate flavors because its double-layer structure was formed by chocolate powders of two flavors, the dark chocolate powder and the mocha flavored chocolate powder.

Thermal stability testing: The product was sealed and packaged in an aluminum foil bag in a single manner and in a double manner, respectively, and the product was placed in an incubator for 48 h at 65°C. Packaging sticking and products sticking, and product collapse were not found, and there was no change in the mouthfeel characteristics of the product.

### Example 4

Freeze-dried chocolate with a sandwich structure

Two chocolate powders made into a center filling structure in this example were two chocolate powders in Examples 1 and 2, namely the dark chocolate powder and the mocha flavored chocolate powder.

The formula of the solvent was identical to that in Example 2.

The formula of the solution was identical to that in Example 2.

The preparation process of the freeze-dried chocolate with a center filling structure included the following steps:
a) Powder making: Two chocolate powders in Examples 1 and 2 were collected, respectively.
b) Solution preparation: The dark chocolate solution and the mocha flavored chocolate solution were prepared according to the formula of the solution and the process in Example 2.
c) Filling and freezing: The dark chocolate solution was filled into the mold till 1/3 the height of the mold cavity, and the size of the cavity was 30 × 30 × 30 mm.

The mold was placed in a freezer that had reached a setting temperature of -30°C, and frozen for 1-3 h until the top of the dark chocolate solution hardened.

The mold was taken out of the freezer, the mocha flavored chocolate solution was filled in the cavities of the mold till 2/3 the height of the cavity, and the mold was frozen in the freezer for 1 h.

The mold was taken out of the freezer again, and the dark chocolate solution was filled until the cavities of the mold were filled.

The mold was placed in a freezer that had reached a setting temperature of -40°C, and frozen for 10 h until all chocolate solutions were completely freeze-formed.
d) Drying: The chocolate mold was taken out of the freezer and immediately placed in a freeze-drying machine for drying treatment. The temperature of the frozen chocolate solution was -40°C, the temperature of the heating plate was 40°C, the degree of vacuum was 15 Pa, and the drying time was 14 h. The freeze-dried chocolate with a center filling structure was obtained.
e) Demolding: The freeze-dried chocolate product with a center filling structure was removed from the mold.

The water content of the freeze-dried chocolate in this example was 0.8%.

Appearance: The side view of the product exhibited a sandwich structure.

Mouthfeel characteristics: Due to the freeze-drying treatment, the prepared freeze-dried chocolate with a sandwich structure had a crispy mouthfeel and rapidly disaggregated by absorbing the saliva in the mouth within 3-5 s, without chewing. Meanwhile, the freeze-dried chocolate with a sandwich structure provided silky taste characteristics in the mouth because its measured fat content was 21.4% and the particle size was controlled at ≤35 µm. The freeze-dried chocolate with a sandwich structure provided an enjoyment of double chocolate flavors because its structure was formed by chocolate powders of two flavors.

Thermal stability testing: The product was sealed and packaged in an aluminum foil bag in a single manner and in a double manner, respectively, and the product was placed in an incubator for 48 h at 65°C. Packaging bonding, mutual product bonding, and product collapse were not found, and there was no change in the mouthfeel characteristics of the product.

### Example 5

Freeze-dried chocolate with nut additives

The edible chocolate powder in this example was identical to that in Example 1.

The formula of the solvent in this example was identical to that in Example 1.

The formula of the solution was as follows: solution 70%, chocolate powder 27%, and chopped peanuts 3%.

The chopped peanuts were 0.2-0.5 mm in size, and American almonds were whole-grain American almonds.

The preparation process of the freeze-dried chocolate with nut additives included the following steps:
a) Powder making: The chocolate powder was from Example 1.
b) Solution preparation: Water and fresh milk were added to a high-shear emulsifier according to the formula, and the high-shear emulsifier ran at 3,000 rpm for 5 min; the speed of the emulsifier was set to 6,000 rpm, and the chocolate powder in the formula was fed gradually; after feeding, the speed was reduced to 3,000 rpm, chopped peanuts were added, and the emulsifier ran for 5 min until the chocolate solution with chopped peanuts was completely emulsified. Herein, the jacket water temperature of the emulsifier was held at 30°C.
c) Filling: The chocolate solution was filled in the cavities of the chocolate mold, and the dimensions of the single cavity were 20 × 20 × 15 mm.
   A whole-grain American almond was embedded, but not completely, in the chocolate solution in the cavities of the mold, and one American almond (Badam) was received in each cavity.
   The mold was placed in a freezer that had reached a setting temperature of -30°C, and frozen for 8 h until the chocolate solution was completely in solid ice state.
d) Drying: The chocolate mold was taken out of the freezer. The temperature of the frozen chocolate solution was around -30°C. The mold was placed in a freeze-drying machine. The temperature of the heating plate of the freeze-drying machine was 40°C, the degree of vacuum was 15 Pa, and the drying time was 14 h. The freeze-dried chocolate with additives was obtained after freeze-drying treatment.
e) Demolding: The freeze-dried chocolate products were removed from the mold.

Appearance: As seen from above, a complete American almond that was incompletely embedded in the chocolate brought the visual impact to consumers and improved the recognition of the product characteristics.

Mouthfeel characteristics: Chopped peanuts and a whole-grain American almond were added in the product. While the consumer chewed the American almond and the chopped peanuts, and the freeze-dried chocolate with nut additives brought more pleasant tasting enjoyment and the enjoyment of a plurality of flavors to the consumer due to the taste characteristics of crispy mouthfeel, rapid disintegration, and smooth dissolution of the freeze-dried dark chocolate.

Thermal stability testing: The product was packed and sealed in an aluminum foil bag in a single manner and in a double manner, respectively, and the product was placed in an incubator for 48 h at 65°C. Packaging sticking and products sticking, and product collapse were not found, neither American almond shedding or stripping was found, and there was no change in the mouthfeel characteristics of the product.

### Example 6

Cheese flavored freeze-dried milk chocolate with shredded cheese

The formula of the milk chocolate powder was as follows: cane sugar 35%, cocoa powder 17%, cocoa liquor 10%, cocoa butter 15%, whole milk powder 10%, whey powder 12.8%, and salt 0.2%. The total fat content of the milk chocolate powder was about 24.5%.

The formula of the solvent was as follows: water 70%, cheese powder 29.7%, and cheese flavor 0.3%.

The formula of the chocolate solution was as follows: solvent 70% and chocolate powder 30%.

The shredded cheese was 1-2 cm in size.
a) Powder making: In the proportions of cocoa butter and cocoa liquor in the formula of the chocolate powder, the cocoa butter and the cocoa liquor were melted in a fat melter. According to the formula of the chocolate powder, a quantity of the cocoa butter and the cocoa liquor were fed into a mixer, and the jacket water temperature of the mixer was 40-50°C. Other powdered materials in the formula of the chocolate powder were added and mixed for 20 min, and the well-mixed chocolate mixture was fed into the hopper of the two-roll refiner in the refining line. The refining line was composed of a two-roll refiner and a five-roll refiner in series. In the automatic running mode, the refining line was started, the chocolate mixture was ground into a milk chocolate powder with a particle size of ≤25 µm, and the milk chocolate powder was collected from the discharging belt of the five-roll refiner.
b) Solution preparation: According to the formula, water and cheese powder were added to a high-shear emulsifier equipped with an emulsifying head, and the high-shear emulsifier was set to run at 3,000 rpm for 5 min. Then the speed of the machine was set to 6,000 rpm., according to the formula of the chocolate solution, the corresponding milk chocolate powder was fed slowly into the emulsifier. After feeding, the emulsifier kept on running for 5 min. The emulsifier was set to 3,000 rpm, and run with cheese flavor for 5 min to obtain a cheese flavored milk chocolate solution. During the solution preparation, the jacket water temperature of the emulsifier was controlled at 30°C.
c) Filling and freezing: Filling: The cheese flavored milk chocolate solution was filled in the cavities of the mold, and the cavity dimensions were 15 × 15 × 15 mm.
   In the chocolate solution filled in the cavity of the mold, three cheese granules were put in each cavity, and the mold was shaken to allow the cheese granules to be embedded in the chocolate solution.
   Freezing: The mold was placed into a freezer that had reached a setting temperature of -30°C, and frozen for 8 h until the chocolate solution was completely frozen.
d) Drying: The mold was taken out of the freezer and immediately placed in a freeze-drying machine to drying treatment the cheese flavored milk chocolate cubes which were frozen at -30°C. The temperature of the heating plate was 40°C, the degree of vacuum was 15 Pa, and the total drying time was 16 h. The cheese flavored freeze-dried milk chocolate with shredded cheese was obtained after drying treatment.
e) Demolding: The freeze-dried milk chocolate product with shredded cheese was removed from the mold by demolding.

Appearance: As seen from above, shredded cheese on the chocolate cube were obviously seen, which providing flavor notes on the product, brought the visual impact to consumers and improved the recognition of the product characteristics.

Taste characteristics: The freeze-dried milk chocolate bar in this example brought more pleasant tasting enjoyment to the consumer due to the taste characteristics of crispy mouthfeel, rapid disintegration, and smooth dissolution. The cheese powder and the cheese flavor added in the chocolate solution provided a double flavor of strong cheese flavor and milk chocolate flavor. Meanwhile, the addition of shredded cheese increased the sense of reality and the enjoyment of strong cheese flavor when consumers chewed.

Thermal stability testing: The product was packed and sealed in an aluminum foil bag in a single manner and in a double manner, respectively, and the product was placed in an incubator for 48 h at 65°C. Packaging and products sticking, and product collapse were not found, and there was no change in the mouthfeel characteristics of the product. Also, neither shredded cheese shedding or separating was found. The only drawback was that shredded cheese showed some color change at high temperatures, but there was no effect on overall mouthfeel.

Although the above example has described the present disclosure in detail, they are only a part of, not all of, the examples of the present disclosure. Other examples may also be obtained by persons based on the examples without creative efforts, and all of these examples shall fall within the protection scope of the present disclosure.

## Claims

1. A preparation process of freeze-dried chocolate, comprising the following steps:
subjecting a chocolate powder and a solvent to mixing and high shear emulsifying to obtain a chocolate solution; and
successively subjecting the chocolate solution to the processing steps of filling, freeze-forming, freeze-drying, and demolding to obtain the freeze-dried chocolate, wherein
a total fat content of the chocolate powder is ≤25%; the chocolate powder has a particle size of ≤35 µm; and
no oils or fats are added in the solvent.

2. The preparation process according to claim 1, wherein the total fat content of the chocolate powder is in a range of 15%-25%.

3. The preparation process according to claim 1, wherein the chocolate powder is obtained by roller refining or jet milling .

4. The preparation process according to claim 3, wherein equipments used in the roller refining comprise two three-roll refiners in series, a six-roll refiner, or a five-roll refiner

5. The preparation process according to claim 1, wherein a water content of the solvent is 90%-100% of solvent weight.

6. The preparation process according to claim 1, wherein a weight ratio of the solvent in the chocolate solution is 10%-80% of the weight of the chocolate solution.

7. The preparation process according to claim 1, wherein the mold filling is carried out at least two times, namely, after previous filling, the chocolate solution is superficially or fully prefrozen into a solid ice, and a next filling is conducted thereon.

8. The preparation process according to claim 1, wherein an additive is further added in cavities of a mold and/or the chocolate solution before and/or after the filling; and the additive is one or more selected from the group consisting of nuts, cereals, vegetables, and fruits.

9. The preparation process according to claim 1, wherein ingredients of the chocolate powder are food-grade ingredients; and the food-grade ingredients comprise cocoa products and other ingredients;
the cocoa products are one or more selected from the group consisting of cocoa butter, cocoa powder, and cocoa liquor; and
the other ingredients are one or more selected from the group consisting of vegetable oils, milk fat, milk powder, sugar, syrup, sugar substitutes, starch, nuts, fruits, vegetables, cereals, and fiber.

10. Freeze-dried chocolate prepared by the preparation process according to any one of claims 1 to 9, having the characteristics of no sticking to packaging, no melting or deforming observed while being put under a temperature of ≤65°C.
